# EUROPÄISCHE PATENTANMELDUNG

(11) **EP 2 765 346 A2**
(43) Veröffentlichungstag der Anmeldung: **13.08.2014**
(21) Anmeldenummer: 14154176.3
(22) Anmeldetag: 06.02.2014
(51) Int. Cl.: F16L 59/14, F16L 59/02, F16L 59/08

(54) **Rohrdämmung**

(30) Priorität: 06.02.2013 DE 202013001138 U
(71) Anmelder: KAEFER Isoliertechnik GmbH & Co. KG, 28195 Bremen (DE); Rockwool International A/S, 2640 Hedehusene (DK)
(72) Erfinder: Christian, Martin, 48014 Bilbao (Vizcaya) (ES); Bremeyer, Walter, 27711 Osterholz-Scharmbeck (DE); Ebus, Jeroen, 6041 VG Roermond (NL); Verhoeff, Ben, 6061 BR Posterholt (NL); Schouten, Marin, 27367 Horstedt (DE)
(74) Vertreter: Tappe, Udo

(57) **Zusammenfassung**

Die Erfindung betrifft eine Rohrdämmung (10) mit einer Rohrdämmschale (11) und einer an der Rohrdämmschale (11) als Ummantelung befestigten Folie (18), wobei die Rohrdämmschale (11) über die gesamte Länge mindestens einen Längsschlitz (15) zum Durchführen eines Rohres aufweist. Um auf eine separate Ummantelung der Rohrdämmung (10) zum Verhindern einer Dampfdiffusion und/oder Beschädigung durch Witterungseinflüsse verzichten zu können, ist die Rohrdämmung (10) dadurch gekennzeichnet, dass sowohl ein Klebemittel (19) zum Verkleben der Folie (18) als auch die Folie (18) zum Bereitstellen einer Dampfdiffusionsdichtigkeits- und/oder einer Witterungsschutzfunktion ausgebildet sind.

## Beschreibung

Die Erfindung betrifft eine Rohrdämmung mit einer Rohrdämmschale und einer an der Rohrdämmschale als Ummantelung befestigten Folie, wobei die Rohrdämmschale über die gesamte Länge mindestens einen Längsschlitz zum Durchführen eines Rohres aufweist.

Eine solche Rohrdämmung ist aus der DE 77 16 911 U1 bekannt. Hierbei ist von Nachteil, dass die an der Außenfläche der Rohrdämmschale aufgebrachte Folie, insbesondere eine Metallfolie, in Verbund mit einem Kleber zum Verschließen des Längsschlitzes keinen vollständig dampfdiffusionsdichten Verschluss bzw. eine dampfdiffusionsdichte Verbindung bereit stellt. Darüber hinaus sind die bekannten Folien zum Ummanteln der Rohrdämmschale anfällig gegenüber Witterungseinflüssen, insbesondere Schlagregen und/oder ultraviolette Strahlung. Daher müssen gegebenenfalls zusätzliche Ummantelungen, Dampfbremsen und/oder Dampfsperren an der Rohrdämmung angebracht werden, die eine Dampfdiffusion reduzieren bzw. verhindern und/oder die Folie und die Rohrdämmschale vor Witterungseinflüssen, Ultraviolett-Strahlung (UV-Strahlung) und/oder Schlagregen schützen.

Es ist daher die der Erfindung zugrunde liegende Aufgabe, eine Rohrdämmung der eingangs genannten Art derart weiterzuentwickeln, dass eine separate Ummantelung der Rohrdämmung zum Verhindern einer Dampfdiffusion und/oder Beschädigung durch Witterungseinflüsse verzichtbar ist.

Die der Erfindung zugrunde liegende Aufgabe wird durch eine Rohrdämmung der eingangs genannten Art gelöst, wobei sowohl ein Klebemittel zum Verkleben der Folie als auch die Folie zum Bereitstellen einer Dampfdiffusionsdichtigkeits- und/oder einer Witterungsschutzfunktion ausgebildet sind.

Hierbei ist von Vorteil, dass aufgrund der geeigneten Ausbildung der Folie und des Klebemittels bereits der gewünschte Witterungsschutz und/oder die gewünschte Dampfdiffusionsdichtigkeit bzw. Strömungsdichtigkeit bereit gestellt ist. Hierdurch ist eine zusätzliche und separate Ummantelung zu der bereits vorhandenen Ummantelung und/oder Kaschierung der Rohrdämmschale mit der Folie verzichtbar. Vorzugsweise ist im Rahmen der vorliegenden Erfindung unter einer dampfdiffusionsdichten Funktion eine Dampf bremsende und/oder eine Dampf sperrende Funktion zu verstehen. Somit sind die Folie und das Klebemittel zum Bereitstellen einer Dampfbremse, insbesondere einer Dampfsperre, für die Rohrdämmschale ausgebildet. Insbesondere ist ein strömungsdichter Verschluss der Rohrdämmschale herstellbar. Vorzugsweise bezieht sich die Dampfdichtigkeitsfunktion auf Wasserdampf. Insbesondere ist im Rahmen der vorliegenden Erfindung unter einer Witterungsschutzfunktion eine witterungsbeständige, UV-strahlungsbeständige und/oder schlagregenfeste Ausbildung zu verstehen.

Gemäß einer weiteren Ausführungsform ist die Folie als eine mehrlagige, insbesondere dreilagige, Verbundfolie und/oder Metallverbundfolie ausgebildet. Eine mehrlagige Gestaltung der Folie ermöglicht die Kombination verschiedener Materialien. Hierdurch ist die Bereitstellung einer Verbundfolie ermöglicht, die mehrere Funktionen, insbesondere die Doppelfunktion einer Dampfdiffusionsdichtigkeit und eines Witterungsschutzes, gleichzeitig bereit stellt.

Die Verbundfolie kann eine witterungsbeständige, UV-strahlungsbeständige und/oder schlagregenfeste Lage aufweisen. Vorzugsweise besteht diese Lage aus Polyethylen. Die witterungsbeständige, UV-strahlungsbeständige und/oder schlagregenfeste Lage kann als eine erste und/oder äußere Lage vorgesehen sein. Insbesondere dient die erste und äußere Lage der Verbundfolie zum Bereitstellen der Witterungsschutzfunktion gegenüber Umwelt- und/oder Wettereinflüssen.

Des Weiteren kann die Verbundfolie eine Lage aus einer Metallfolie aufweisen. Die Metallfolie bzw. metallene Lage dient vorzugsweise zum Bereitstellen der Dampfdiffusionsdichtigkeit, insbesondere um Verhindern einer Wasserdampfdiffusion, und/oder der Strömungsdichtigkeit. Vorzugsweise weist die Lage aus der Metallfolie eine Dicke von mindestens 50 µm auf. Hierdurch ist eine hinreichende Dampf bremsende und/oder Dampf sperrende Funktion gewährleistet. Vorzugsweise ist die Metallfolie als eine zweite und/oder mittlere Lage vorgesehen. Insbesondere ist auf die Außenfläche der Metallfolie die erste Lage aufgebracht, wodurch die Metallfolie zuverlässig vor Witterungs- und/oder Umwelteinflüssen geschützt ist.

Vorzugsweise weist die Verbundfolie eine Lage aus einem, insbesondere reißfesten, Gewebe auf. Insbesondere bei einem reißfesten Gewebe ist die Belastbarkeit der Verbundfolie verbessert. Vorzugsweise die Lage aus dem Gewebe als eine dritte und/oder innere Lage vorgesehen. Insbesondere die Gewebelage mit der Innenfläche der Metallfolie verbunden, wobei vorzugsweise die von der Metallfolie abgewandte Fläche der Gewebelage der Außenfläche der Rohrdämmschale zugewandt bzw. auf diese aufgeklebt ist.

Nach einer weiteren Ausführungsform ist ein Klebemittel auf der Basis von Polyisobutylen vorgesehen. Hierbei ist von Vorteil, dass ein Klebemittel auf Polyisobutylenbasis einen dampfdiffusionsdichten, insbesondere wasserdampfdiffusionsdichten und/oder strömungsdichten, Verschluss bzw. eine entsprechende Verbindung zwischen einer Innenseite und einer Außenseite der Folie, insbesondere der Verbundfolie, und/oder der Außenfläche der Rohrdämmschale ermöglicht. Vorzugsweise ist das Klebemittel als einen Flüssigkleber ausgebildet.

Vorzugsweise ist die Folie auf einer Außenfläche der Rohrdämmschale mindestens im Bereich und/oder benachbart zu einer die Außenfläche umlaufenden Kante der Rohrdämmschale mittels eines Klebers befestigt. Insbesondere handelt es sich bei dem Kleber um einen hierfür üblichen Kleber. Alternativ kann anstelle eines üblichen Klebers das erfindungsgemäße Klebemittel eingesetzt werden. Hierdurch ist eine sichere und dampfdiffusionsdichte Verbindung der Folie mit der Rohrdämmschale herstellbar. Vorzugsweise ist die Folie vollflächig mit der Außenfläche der Rohrdämmschale mittels des Klebers verklebt.

Gemäß einer weiteren Ausführungsform weist die Folie im Bereich des Längsschlitzes zum Durchführen eines Rohres und ausgehend von einer ersten Längskante der Rohrdämmschale eine Folienüberlappung zum Überdecken des Längsschlitzes auf. Vorzugsweise ist der Längsschlitz zum Durchführen des Rohres, insbesondere in einen Aufnahmeraum der Rohrdämmung für das Rohr, geöffnet. Insbesondere sind in Längsrichtung der Rohrdämmschale verlaufende längsseitige einander zugewandte Stirnflächen der Rohrdämmschale in dem geöffneten Zustand des Längsschlitzes voneinander beabstandet. Vorzugsweise ist der Längsschlitz in einem montierten Zustand der Rohrdämmung geschlossen. Insbesondere liegen die längsseitigen Stirnflächen im geschlossenen Zustand des Längsschlitzes aufeinander. Eine Folienüberlappung ermöglicht die Herstellung eines witterungssicheren und dampfdiffusionsdichten Abschlusses des, insbesondere geschlossenen, Längsschlitzes. Eine separates Abdeckelement, insbesondere ein Klebeband, zum Abdecken der des Längsschlitzes ist somit verzichtbar. Vorzugsweise ist die Folienüberlappung als ein die erste Längskante überstehendes Ende der Folie ausgebildet. Im unmontierten Zustand ist die Folienüberlappung als ein insbesondere freies Ende der Folie ausgebildet. An einer Innenseite der Folienüberlappung kann mindestens ein Streifen des Klebemittels zum witterungsbeständigen und/oder dampfdiffusionsdichten Verbinden der Folienüberlappung mit der Außenseite der Folie im Bereich einer der ersten Längskante zugewandten zweiten Längskante der Rohrdämmschale vorgesehen sein. Vorzugsweise ist das Klebemittel bereits bei der Herstellung bzw. werksseitig auf die Innenseite der Folienüberlappung aufgebracht. Zum Schutz des innenseitig aufgebrachten Klebemittels kann ein ablösbarer Schutzstreifen auf das Klebemittel aufgebracht sein, der vor dem endgültigen Verbinden der Folienüberlappung mit der Außenseite der die Rohrdämmschale umgebenden Folie abgezogen wird. Alternativ zu einem schmalen Klebestreifen kann auch die Innenseite der Folienüberlappung vollflächig mit dem Klebemittel und/oder dem Schutzstreifen versehen sein. Vorzugsweise wird die maximale Breite des Längsschlitzes, insbesondere im geöffneten Zustand, zum Durchführen eines Rohres durch den Abstand der ersten Längskante von der zweiten Längskante bestimmt.

Nach einer weiteren Ausführungsform ist zum Ausbilden eines Witterungsschutzes und/oder einer Dampfbremse, insbesondere einer Dampfsperre, im Bereich eines Stoßes von zwei Stirnseiten zweier Rohrdämmschalen ein separates Verbindungselement aus dem Material der Folie vorgesehen. Insbesondere ist das Verbindungselement als ein Streifen aus der, insbesondere dreilagigen, Verbundfolie ausgebildet. Hierdurch ist eine witterungsbeständige und/oder dampfdiffusionsdichte Verbindung im Bereich des Stoßes herstellbar. Vorzugsweise hat die Innenseite des Verbindungselementes das Klebemittel zum Herstellen einer witterungsbeständigen und/oder dampfdiffusionsdichten Verbindung mit der Außenseite der die Rohrdämmschale umgebenden Folie. Vorzugsweise ist das Klebemittel bereits bei der Herstellung bzw. werksseitig auf die Innenseite des Verbindungselementes aufgebracht. Zum Schutz des, insbesondere innenseitig und/oder auf der inneren Lage, aufgebrachten Klebemittels kann ein ablösbarer Schutzstreifen auf das Klebemittel aufgebracht sein, der vor dem endgültigen Verbinden des Verbindungselementes mit der Außenseite der die Rohrdämmschale umgebenden Folie abgezogen wird. Vorzugsweise ist das Klebemittel vollflächig auf der Innenseite des Verbindungselementes aufgebracht.

Vorzugsweise weist die Rohrdämmschale zwei Halbschalen auf. Insbesondere bilden die zwei Halbschalen im montierten Zustand ein Vollrohr, das zuvor eingeführte Rohr bzw. ein Mediumrohr umschließt. Die Rohrdämmschale und/oder die beiden Halbschalen können Mineralwolle aufweisen oder aus Mineralwolle ausgebildet sein. Der Längsschlitz zum Durchführen eines Rohres kann als ein erster Längsschlitz ausgebildet sein. Vorzugsweise sind zwei vom ersten Längsschlitz abgewandte und einander zugewandte Längskanten eines zweiten Längsschlitzes der beiden Halbschalen mit der Folie zum Bereitstellen einer Scharnierfunktion überdeckt. Aufgrund der somit realisierbaren Scharnierfunktion lassen sich die Halbschalen, insbesondere im Bereich des ersten Längsschlitzes, derart auseinanderklappen, dass die Rohrdämmung auf einfache Art um ein Rohr gelegt werden kann. Sobald das Rohr in einem Aufnahmeraum der Rohrdämmung aufgenommen ist, sind die Halbschalen mittels des Scharniers bzw. aufgrund der Scharnierfunktion aufeinander zu klappbar. Vorzugsweise wird der somit geschlossene erste Längsschlitz anschließend mittels der Folienüberlappung überdeckt, wobei aufgrund des Verklebens der Folienüberlappung mit der die Rohrdämmschale umgebenden Folie der erste und/oder zweite Längsschlitz verschlossen bleibt.

Nachfolgend wird die Erfindung anhand der Figuren näher erläutert. Es zeigen:
- Fig. 1: einen Querschnitt einer schematisch dargestellten erfindungsgemäßen Rohrdämmung,
- Fig. 2: einen Querschnitt einer schematisch dargestellten Folie für eine erfindungsgemäße Rohrdämmung, und
- Fig. 3: einen Querschnitt zweier stirnseitig aneinander stoßender und miteinander verbundener Rohrdämmschalen einer erfindungsgemäßen Rohrdämmung.

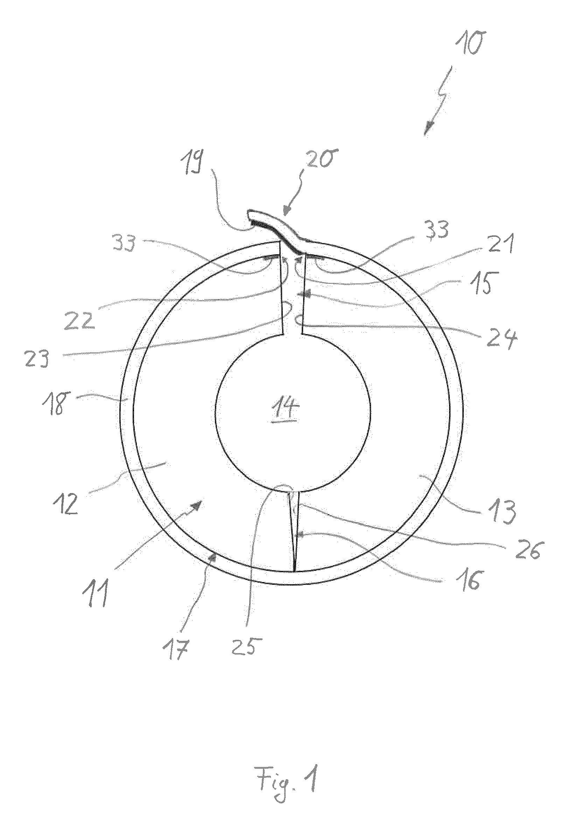

Fig. 1 zeigt einen Querschnitt einer schematisch dargestellten erfindungsgemäßen Rohrdämmung 10. Die Rohrdämmung 10 umfasst eine Rohrdämmschale 11, die einen im Wesentlichen ringförmigen Querschnitt hat. Bei diesem Ausführungsbeispiel besteht die Rohrdämmschale 11 aus Mineralwolle und ist aus zwei Halbschalten 12, 13 gebildet. Die Halbschalen 12, 13 weisen einen im Wesentlichen halbringförmigen Querschnitt auf. Die längsseitigen Stirnflächen 23, 25 der ersten Halbschale 12 sind den längsseitige Stirnflächen 24, 26 der zweiten Halbschale 13 zugewandt. Die Rohrdämmschale 11 bildet einen im Querschnitt im Wesentlichen kreisförmigen Aufnahmeraum 14 zum Aufnehmen eines hier nicht näher dargestellten Rohres.

Die Rohrdämmschale 11 weist einen sich in Längsrichtung der Rohrdämmschale 11 erstreckenden ersten Längsschlitz 15 und einen von dem ersten Längsschlitz 15 abgewandt angeordneten sich ebenfalls in Längsrichtung der Rohrdämmschale 11 erstreckende zweiten Längsschlitz 16 auf. Dem ersten Längsschlitz 15 sind die längsseitigen Stirnflächen 23, 24 und dem zweiten Längsschlitz die längsseitigen Stirnflächen 25, 26 zugeordnet. Auf einer Außenfläche 17 der Rohrdämmschale 11 ist eine Folie 18 aufgebracht, die die Rohrdämmschale 11 ummantelt bzw. kaschiert.

Die Folie 18 überdeckt den zweiten Längsschlitz 16 bzw. den Kontaktbereich der sich im Bereich des zweiten Längsschlitzes 16 in Längsrichtung der Rohrdämmschale 11 erstreckenden Stirnflächen 25, 26 der beiden Halbschalen 12, 13. Hierdurch ist im Bereich des zweiten Längsschlitzes 16 ein Scharnier bzw. eine Scharnierfunktion bereitgestellt. Dies erlaubt ein Auf- und/oder Zuklappen der Halbschalen 12, 13, wodurch die Stirnflächen 23, 24 des ersten Längsschlitz 15 zum Anbringen der Rohrdämmung 10 an einem Rohr und/oder zum Abnehmen der Rohrdämmung 10 von einem Rohr voneinander gelöst bzw. miteinander kontaktierbar sind.

Die Folie 18 ist im Bereich des ersten Längsschlitzes 15 auf der Außenfläche 17 mittels eines Klebers 33 mit der Rohrdämmschale 11 verklebt. Der Kleber 33 ist bei diesem Ausführungsbeispiel benachbart zu einer die Außenfläche 17 umlaufenden Kante der Rohrdämmschale 11 bzw. der Halbschalen 12, 13 in der Gestalt eines Klebestreifens angeordnet. Der Kleber 33 ist auf der Außenfläche 17 im Bereich einer Längskante 21, 22 vorgesehen, die sich in Längsrichtung des ersten Längsschlitzes 15 erstreckt. Des Weiteren ist der Kleber 33 im Bereich einer Kante auf der Außenfläche 17 der Rohrdämmschale 11 an einem stirnseitigen Ende der Rohrdämmschale 11 vorgesehen. Alternativ kann die Folie 18 vollflächig mit der Außenfläche 17 der Rohrdämmschale 11 mittels des Klebers 33 verklebt sein. Bei diesem Ausführungsbeispiel ist der Kleber 33 ein für diesen Zweck üblicher Kleber.

Des Weiteren hat die Folie 18 im Bereich des ersten Längsschlitzes 15 eine Folienüberlappung 20. Die Folienüberlappung 20 erstreckt sich als ein freies Ende der Folie 18 von einer ersten Längskante 21 der Halbschale 13 in Richtung und über eine der ersten Längskante 21 zugewandten zweiten Längskante 22 der Halbschale 12. Die Folienüberlappung 20 hat auf ihrer Innenseite ein Klebemittel 19. Das Klebemittel 19 ist bei diesem Ausführungsbeispiel ein Flüssigkleber auf der Basis von Polyisobutylen. Hier ist das Klebemittel 19 vollflächig auf der Innenseite der Folienüberlappung 20 aufgebracht. Für eine bessere Darstellung ist die Folie 18 in Bezug auf die Rohrdämmschale 11 in den Figuren erheblich dicker dargestellt, als dies in der Realität üblicherweise der Fall sein wird.

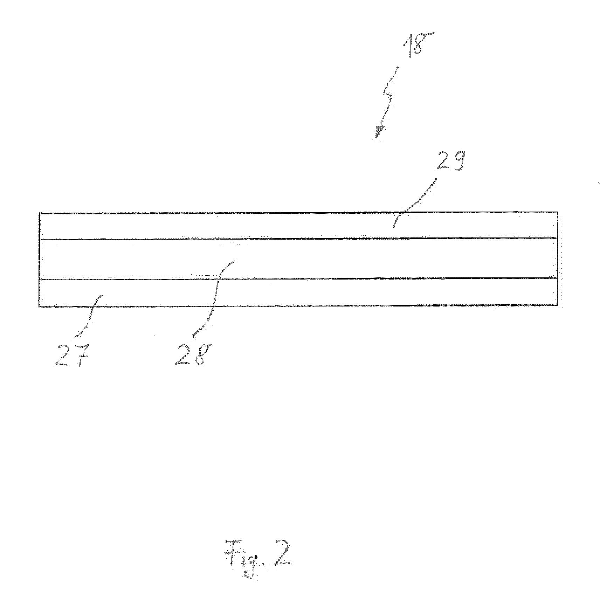

Fig. 2 ist ein Querschnitt einer schematisch dargestellten Folie 18 für eine erfindungsgemäße Rohrdämmung 10 zu entnehmen. Die Folie 18 ist bei diesem Ausführungsbeispiel als eine dreilagige Verbundfolie ausgebildet. Eine erste Lage 27 ist aus Polyethylen gebildet und ist witterungsbeständig, UV-beständig und schlagregenfest. Die erste Lage 27 ist als eine äußere Lage vorgesehen, die von der Außenfläche 17 der in dieser Figur nicht dargestellten Rohrdämmschale 11 abgewandt ist.

Die erste Lage 27 ist mit einer zweiten Lage 28 verbunden. Die zweite Lage 28 ist als eine Metallfolie ausgebildet, die eine Dicke von mindestens 50 µm aufweist. Die zweite Lage 28 bzw. die Metallfolie ist strömungsdicht und dampfdiffusionsdicht, nämlich wasserdampfdiffusionsdicht, ausgebildet. Die zweite Lage 28 ist als eine mittlere Lage ausgebildet, die auf einer Seite mit der ersten Lage 27 und auf einer von der ersten Lage 27 abgewandten Seite mit einer dritten Lage 29 verbunden ist.

Die dritte Lage 29 ist als eine reißfeste Gewebelage ausgebildet. Bei der in dieser Figur nicht dargestellten Rohrdämmschale 11 liegt die von der zweiten Lage 28 abgewandte Seite der dritten Lage 29 auf der Außenfläche 17 der Rohrdämmschale 11 auf und ist mit dieser mittels des Klebers 33 befestigt.

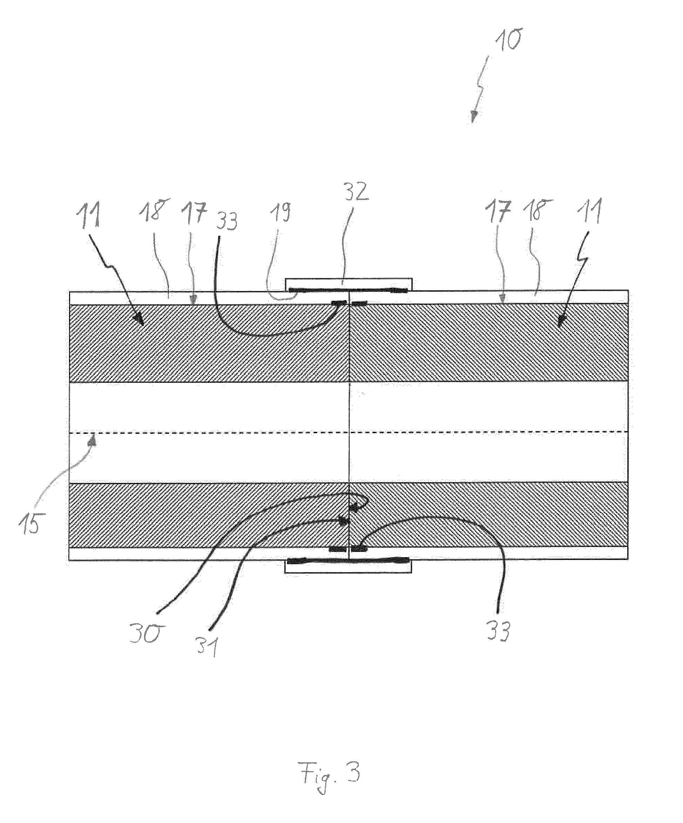

Fig. 3 zeigt einen Querschnitt zweier stirnseitig aneinander stoßender und miteinander verbundener Rohrdämmschalen 11 einer erfindungsgemäßen Rohrdämmung 10. Wie mit der gestrichelten Linie angedeutet, ist der erste Längsschlitz 15 vollständig verschlossen und die hier nicht gezeigten längsseitigen Stirnflächen 23, 24 sind ebenso aufeinander liegend in Kontakt, wie auch die hier ebenfalls nicht erkennbaren längsseitigen Stirnflächen 25, 26 des zweiten Längsschlitzes 16.

Eine Stirnseite 30 der ersten Rohrdämmschale 11 liegt an einer Stirnseite 31 der zweiten Rohrdämmschale 11 an. Die Folie 18 ist mittels des Klebers 33 im Bereich einer den Stirnflächen 30, 31 zugeordneten Kanten auf der Außenfläche 17 der Rohrdämmschalen 11 an jeweils einem stirnseitigen Ende der beiden Rohrdämmschalen 11 befestigt.

Des Weiteren ist ein separates Verbindungselement 32 vorgesehen. Das Verbindungselement 32 überdeckt den Bereich des Stoßes der beiden Stirnflächen 31, 32 und ist auf der Außenseite der Folie 18 aufgebracht. Das Verbindungselement 32 umgibt den Stoßbereich der beiden Rohrdämmschalen 11 kreisringförmig. Hierbei ist das Verbindungselement 32 mittels des Klebemittels 19 mit der Außenseite der Folie 18 verklebt. Bei diesem Ausführungsbeispiel ist das Klebemittel 19 vollflächig auf die Innenseite des Verbindungselementes 32 aufgebracht

Des Weiteren ist das Verbindungselement 32 bei diesem Ausführungsbeispiel aus dem Material der Folie 18 aufgebaut. Somit ist das Verbindungselement 32 eine dreilagige Verbundfolie mit dem Klebemittel 19 auf der Innenseite. Hinsichtlich des dreilagigen Aufbaus der Verbundfolie wird auch auf die vorangehende Beschreibung verwiesen.

Nachfolgend wird die Erfindung anhand der Figuren 1 bis 3 näher erläutert:
Zum Befestigen der Rohrdämmung 10 an einem Rohr werden die beiden Halbschalen 12, 13 der Rohrdämmschale 11 im Bereich des ersten Längsschlitzes 15 auseinander geklappt, wobei das Auseinanderklappen der beiden Halbschalen 12, 13 aufgrund des zweiten Längsschlitzes 16, die zusammen mit der den zweiten Längsschlitz 16 überdeckenden Folie 18 eine Scharnierfunktion bereit stellt, erleichtert ist.
Sobald das Rohr in dem Aufnahmeraum 14 aufgenommen ist, werden die Halbschalen 12, 13 aufeinander zu bewegt, bis die längsseitigen Stirnflächen 23, 24 bzw. 25, 26 aneinander liegen. In dieser Position überlappt der Folienüberlappung 20 den nunmehr geschlossenen ersten Längsschlitz 15. Das bereits werkseitig an der Innenseite der Folienüberlappung 20 angebrachte Klebemittel 19 weist einen abziehbaren Schutzstreifen auf. Dieser Schutzstreifen wird entfernt und die Innenseite der Folienüberlappung 20 mit der Außenseite der Folie 18 mittels des Klebemittels 19 verklebt. Aufgrund der mehrlagigen Ausbildung der Folie 18 mit einer mindestens 50 µm dicken Metallfolie und einer äußeren Polyethylenlage entsteht zusammen mit dem Klebemittel 19 auf Basis von Polyisobutylen eine strömungsdichte, wasserdampfdiffusionsdichte, UV-beständige, witterungsbeständige und schlagenregenfeste Ummantelung. Somit ist eine weitere zusätzliche Ummantelung der Rohrdämmung 10 zum Bereitstellen eines Witterungsschutzes, einer Dampfsperre und/oder einer Dampfbremse verzichtbar.

### Bezugszeichenliste:

- 10: Rohrdämmung
- 11: Rohrdämmschale
- 12: Halbschale
- 13: Halbschale
- 14: Aufnahmeraum
- 15: Erster Längsschlitz
- 16: Zweiter Längsschlitz
- 17: Außenfläche
- 18: Folie
- 19: Klebemittel
- 20: Folienüberlappung
- 21: Längskante
- 22: Längskante
- 23: Längsseitige Stirnfläche
- 24: Längsseitige Stirnfläche
- 25: Längsseitige Stirnfläche
- 26: Längsseitige Stirnfläche
- 27: Erste Lage
- 28: Zweite Lage
- 29: Dritte Lage
- 30: Stirnseite
- 31: Stirnseite
- 32: Verbindungselement
- 33: Kleber

## Patentansprüche

1. Rohrdämmung mit einer Rohrdämmschale (11) und einer an der Rohrdämmschale (11) als Ummantelung befestigten Folie (18), wobei die Rohrdämmschale (11) über die gesamte Länge mindestens einen Längsschlitz (15) zum Durchführen eines Rohres aufweist, **dadurch gekennzeichnet, dass** sowohl ein Klebemittel (19) zum Verkleben der Folie (18) als auch die Folie (18) zum Bereitstellen einer Dampfdiffusionsdichtigkeits- und/oder einer Witterungsschutzfunktion ausgebildet sind.

2. Rohrdämmung nach Anspruch 1, **dadurch gekennzeichnet, dass** die Folie (18) als eine mehrlagige, insbesondere dreilagige, Verbundfolie und/oder Metallverbundfolie ausgebildet ist.

3. Rohrdämmung nach Anspruch 2, **dadurch gekennzeichnet, dass** die Verbundfolie (18) eine witterungsbeständige, UV-beständige und/oder schlagregenfeste Lage (27), insbesondere aus Polyethylen, aufweist, wobei vorzugsweise die witterungsbeständige, UV-beständige und/oder schlagregenfeste Lage (27) als eine erste und/oder äußere Lage (27) vorgesehen ist.

4. Rohrdämmung nach Anspruch 2 oder 3, **dadurch gekennzeichnet, dass** die Verbundfolie (18) eine Lage (28) aus einer Metallfolie, insbesondere mit einer Dicke von mindestens 50 µm, aufweist, wobei vorzugsweise die Metallfolie als eine zweite und/oder mittlere Lage (28) vorgesehen ist.

5. Rohrdämmung nach einem der Ansprüche 2 bis 4, **dadurch gekennzeichnet, dass** die Verbundfolie (18) eine Lage (29) aus einem, insbesondere reißfesten, Gewebe aufweist, wobei vorzugsweise die Lage (29) aus dem Gewebe als eine dritte und/oder innere Lage (29) vorgesehen ist.

6. Rohrdämmung nach einem der vorhergehenden Ansprüche, **gekennzeichnet durch** ein Klebemittel (19), insbesondere einen Flüssigkleber, auf der Basis von Polyisobutylen.

7. Rohrdämmung nach einem der vorhergehenden Ansprüche, **dadurch gekennzeichnet, dass** die Folie (18) auf einer Außenfläche (17) der Rohrdämmschale (11) mindestens im Bereich und/oder benachbart zu einer die Außenfläche (17) umlaufenden Kante der Rohrdämmschale (11) mittels eines Klebers (33) befestigt ist, vorzugsweise ist die Folie (18) vollflächig mit der Außenfläche (17) der Rohrdämmschale (11) mittels des Klebers (33) verklebt.

8. Rohrdämmung nach einem der vorhergehenden Ansprüche, **dadurch gekennzeichnet, dass** die Folie (18) im Bereich des Längsschlitzes (15) zum Durchführen eines Rohres und ausgehend von einer ersten Längskante (21) der Rohrdämmschale (11) eine Folienüberlappung (20) zum Überdecken des Längsschlitzes (15) aufweist, wobei vorzugsweise die Folienüberlappung (20) als ein die erste Längskante (21) überstehendes Ende der Folie (18) ausgebildet ist und/oder an einer Innenseite der Folienüberlappung (20) mindestens ein Streifen des Klebemittels (19) zum witterungsbeständigen und/oder dampfdiffusionsdichten Verbinden der Folienüberlappung (20) mit der Außenseite der Folie (18) im Bereich einer der ersten Längskante (21) zugewandten zweiten Längskante (22) der Rohrdämmschale (11) vorgesehen ist, wobei vorzugsweise das Klebemittel (19) vollflächig an der Innenseite der Folienüberlappung (20) aufgebracht ist.

9. Rohrdämmung nach einem der vorhergehenden Ansprüche, **dadurch gekennzeichnet, dass** zum Ausbilden eines Witterungsschutzes und/oder einer Dampfbremse, insbesondere einer Dampfsperre, im Bereich eines Stoßes von zwei Stirnseiten (30, 31) zweier Rohrdämmschalen (11) ein separates Verbindungselement (32) aus dem Material der Folie (18) vorgesehen ist, wobei vorzugsweise die Innenseite des Verbindungselementes (32) das Klebemittel (19) zum Herstellen einer witterungsbeständigen und/oder dampfdiffusionsdichten Verbindung mit der Außenseite die Rohrdämmschale (11) umgebenden Folie (18) hat.

10. Rohrdämmung nach einem der vorhergehenden Ansprüche, **dadurch gekennzeichnet, dass** die Rohrdämmschale (11) zwei Halbschalen (12, 13), insbesondere aus Mineralwolle, aufweist, wobei vorzugsweise zwei von einem ersten Längsschlitz (15) zum Durchführen eines Rohres abgewandte und einander zugewandte Längskanten (25, 26) eines zweiten Längsschlitzes (16) der beiden Halbschalen (12, 13) mit der Folie (18) zum Bereitstellen einer Scharnierfunktion überdeckt sind.
